# EUROPÄISCHE PATENTSCHRIFT

(11) **EP 2 441 348 B1**
(45) Veröffentlichungstag und Bekanntmachung des Hinweises auf die Patenterteilung: **08.04.2015**
(21) Anmeldenummer: 11185193.7
(22) Anmeldetag: 14.10.2011
(51) Int. Cl.: A46B 13/06

(54) **Vorrichtung zum Reinigen von Oberflächen**
Surface cleaning apparatus
Dispositif de nettoyage de surfaces

(30) Priorität: 15.10.2010 DE 102010048625
(43) Veröffentlichungstag der Anmeldung: 18.04.2012
(73) Patentinhaber: Jäger, Anton, 89250 Senden (DE)
(72) Erfinder: Jäger, Anton, 89250 Senden (DE)
(74) Vertreter: Ewert, Jörg Wilhelm

(56) Entgegenhaltungen:
- DE-A1- 3 331 402
- DE-U1-202009 008 001
- JP-A- 2000 219 107
- NL-A- 9 101 373
- US-A- 1 839 768
- US-B1- 6 862 769

## Beschreibung

Die vorliegende Erfindung betrifft eine Vorrichtung zum Reinigen von Oberflächen.

Derartige Vorrichtungen sind grundsätzlich bekannt und werden beispielsweise zum Reinigen von Solaranlagen eingesetzt. Es kann ein Reinigungskopf mit einem Basisteil und einem Bürstenelement vorgesehen sein, wobei das Bürstenelement in eine Reinigungsbewegung relativ zu dem Basisteil versetzbar ist. In das Basisteil kann ein Fluidantrieb integriert sein, welcher dazu ausgebildet ist, die Strömungsenergie eines dem Basisteil unter Druck zugeführten Reinigungsfluids in die Reinigungsbewegung des Bürstenelements umzusetzen. Bei dem Bürstenelement kann es sich insbesondere um eine drehbar an dem Basisteil gelagerte Reinigungswalze handeln, welche beim Reinigungsvorgang unter fortlaufender Eigenrotation manuell oder automatisch über die zu reinigende Fläche bewegt wird.

Kosten und Eigengewicht einer derartigen Vorrichtung sind allerdings relativ hoch, weshalb sie im Grunde weder für Privathaushalte noch zum Reinigen von in der Praxis regelmäßig geneigten Solaranlagenflächen auf Gebäudedächern besonders geeignet ist.

Die Druckschrift US 1 839 768 A offenbart eine Reinigungsvorrichtung, welche einen in einem Gehäuse angeordneten, mit Wasser beaufschlagbaren Rotor, von dem aus beidseitig des Gehäuses angeordnete Bürsten über eine gemeinsame Achse in Rotation versetzt werden können.

Gegenstand der Druckschrift DE 33 31 402 A1 ist eine Autowaschbürste, welche mit einem Flüssigkeitsmotor antreibbare, in einem Gehäuse angeordnete rotierbare Bürsten aufweist, wobei der Flüssigkeitsstrom über eine Abfuhrleitung aus dem Flüssigkeitsmotor herausgeführt und in einer Düse zur Beaufschlagung der Bürsten geteilt wird.

Aus der Druckschrift NL 9 101 373 A ist eine Reinigungsvorrichtung bekannt, welche einen Fluidantrieb und Verteilerrohre für die Zuführung eines Fluids zu rotierbaren Bürsten umfasst.

DE 20 2009 008 001 U1 beschreibt eine Reinigungsvorrichtung mit zwei nebeneinander angeordneten Tellerbürsten, die von einem gemeinsamen Wassermotor angetrieben werden und jeweils an ihrer Rückseite mit Bohrungen versehen sind, über die Reinigungsflüssigkeit in die Tellerbürsten eingebracht werden kann.

Aufgabe der Erfindung ist es, eine Vorrichtung der eingangs genannten Art zu schaffen, die bei zuverlässiger Funktionsweise kostengünstig herstellbar ist und ein möglichst geringes Eigengewicht aufweist.

Die Lösung dieser Aufgabe erfolgt durch eine Vorrichtung mit den Merkmalen des Anspruchs 1.

Der erfindungsgemäße Reinigungskopf umfasst ein Basisteil und wenigstens zwei an entgegengesetzten Seiten des Basisteils vorgesehene Bürstenelemente. Der Fluidantrieb weist ein unmittelbar vom Fluid angetriebenes Antriebsorgan auf, insbesondere eine Turbine oder ein Schaufelrad, von dem beide Bürstenelemente gemeinsam antreibbar sind. Dies ermöglicht es, mit lediglich einem einzigen Antriebsorgan zwei separate Bürstenelemente anzutreiben und somit beim Reinigen eine größere Fläche zu überstreichen als bei Verwendung eines einzigen Bürstenelements. Durch den Verzicht auf ein zweites Antriebsorgan können insbesondere Kosten und Gewicht eingespart werden.

Ferner weist der Fluidantrieb erfindungsgemäß einen gemeinsamen Fluidzufluss, ein Mittel zum Verzweigen eines zugeführten Fluidstroms in zwei entgegengesetzte Teilströme und zwei an den entgegengesetzten Seiten des Basisteils vorgesehene, zu den jeweiligen Bürstenelementen führende Fluidabflüsse zur Beaufschlagung der Bürstenelemente von innen heraus auf. Die Teilströme werden somit dazu herangezogen, die Bürstenelemente von innen heraus mit Reinigungsfluid zu beaufschlagen. Die Bürstenelemente können zu diesem Zweck mit geeigneten Öffnungen versehen sein, aus welchen das Fluid während des Betriebs austritt.

Weiterbildungen der Erfindung sind in den abhängigen Ansprüchen, der Beschreibung sowie den beigefügten Zeichnungen angegeben.

Gemäß einer Ausführungsform der Erfindung umfasst der Fluidantrieb eine Getriebeeinheit mit einem vom Fluid beaufschlagten Eingang am Antriebsorgan und zwei die Bürstenelemente beaufschlagenden Ausgängen. Der Eingang und die beiden Ausgänge können beispielsweise T-förmig angeordnet sein, wodurch sich eine symmetrische Gesamtkonstruktion der Reinigungsvorrichtung ergibt.

Gemäß einer weiteren Ausführungsform der Erfindung ist für jedes Bürstenelement ein Getriebe vorgesehen, wobei die Getriebe eingangsseitig mit dem gemeinsamen Antriebsorgan gekoppelt sind. Die Getriebe ermöglichen durch Bereitstellung eines geeigneten Übersetzungsverhältnisses eine Anpassung der Drehzahl der Bürstenelemente an die jeweilige Anwendung.

Der Fluidantrieb kann direkt die walzenförmig gestalteten Bürstenelemente oder Antriebsrollen für die Bürstenelemente in Rotation versetzen. Beispielsweise kann ein einzelnes Turbinenrad mit zwei Ausgangselementen gekoppelt sein, welche die Bürstenelemente oder die Antriebsrollen antreiben.

Die Erfindung wird nachfolgend beispielhaft unter Bezugnahme auf die Zeichnungen beschrieben.
- Fig. 1: zeigt eine Reinigungsvorrichtung gemäß einer ersten Ausführungsform der Erfindung.
- Fig. 2: ist eine Teilansicht der Vorrichtung gemäß Fig. 1 in Explosionsdarstellung.
- Fig. 3: ist eine Seitenansicht der Vorrichtung gemäß Fig. 1.
- Fig. 4: zeigt eine Reinigungsvorrichtung gemäß einer zweiten Ausführungsform der Erfindung.

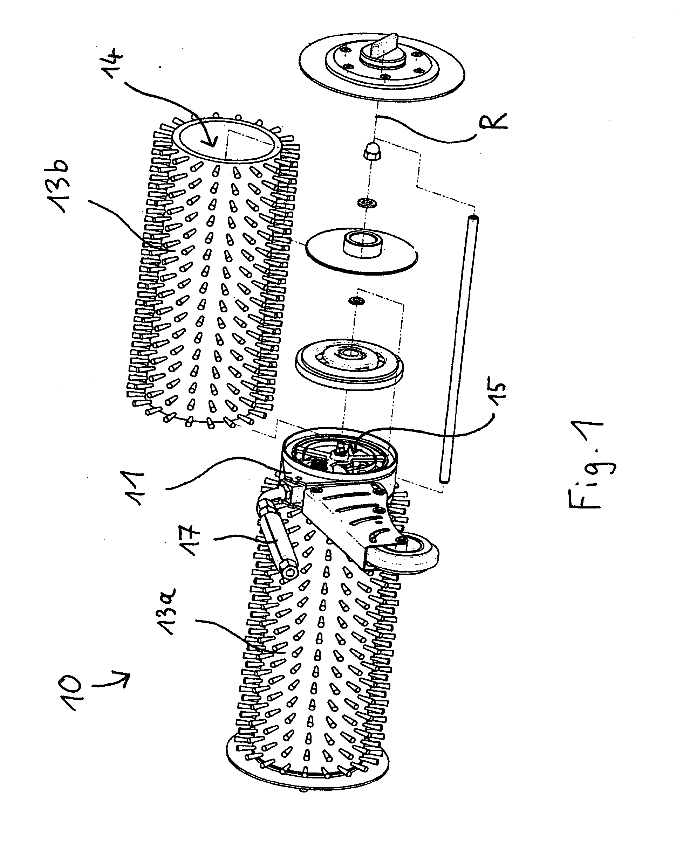

Die in Fig. 1 dargestellte erfindungsgemäße Reinigungsvorrichtung umfasst einen Reinigungskopf 10 mit einem Basisteil 11 und zwei an entgegengesetzten Seiten des Basisteils 11 vorgesehenen Bürstenelementen 13a, 13b. Die Bürstenelemente 13a, 13b sind hier als zylindrische Reinigungswalzen ausgebildet, welche um eine Rotationsachse R drehbar an dem Basisteil 11 gelagert sind. An der Umfangsfläche der Bürstenelemente 13a, 13b ist eine auf den jeweiligen Reinigungszweck zugeschnittene Ausstattung vorgesehen, beispielsweise eine Beborstung.

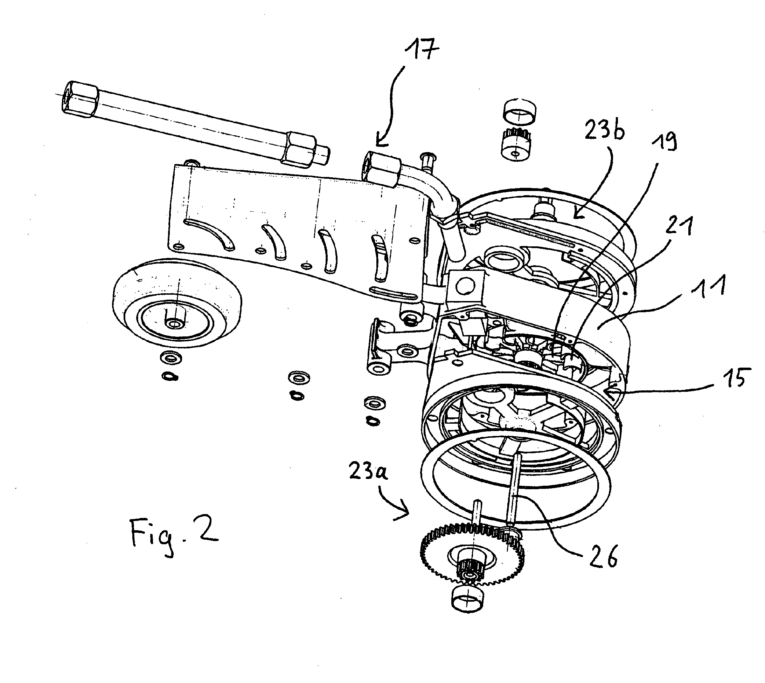

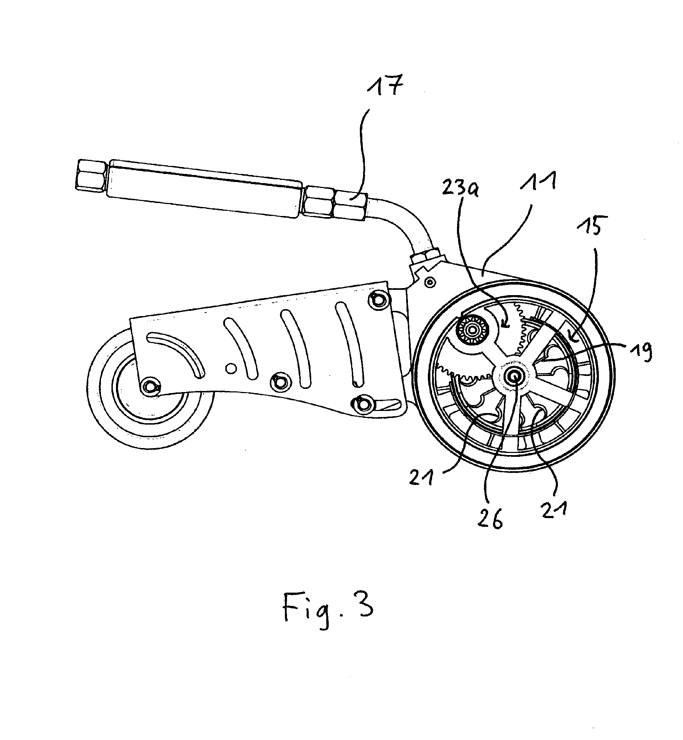

Dem Basisteil 11 kann über ein Anschlussstück 17 unter Druck gesetztes Reinigungsfluid, insbesondere Wasser, zugeführt werden. Gemäß Fig. 2 und 3 ist ein Turbinenrad 19 mit Schaufeln 21 um die Rotationsachse R drehbar in dem gehäuseartigen Basisteil 11 gelagert und derart angeordnet, dass die Schaufeln 21 durch den in das Basisteil 11 eintretenden Fluidstrom beaufschlagt und somit das Turbinenrad 19 in Rotation versetzt wird. Beidseitig des Turbinenrads 19 sind Getriebe 23a, 23b vorgesehen, welche eine Drehbewegung des Turbinenrads 19 an das jeweilige Bürstenelement 13a, 13b weitervermitteln. Die Getriebeeinheiten 23a, 23b stellen dabei ein gewünschtes Übersetzungsverhältnis zur Anpassung der Drehzahlen der Bürstenelemente 13a, 13b bereit. Bei der dargestellten Ausführungsform werden die beiden Getriebe 23a, 23b eingangsseitig durch die gleiche Antriebswelle 26 angetrieben, auf welcher auch das Turbinenrad 19 sitzt.

Während des Reinigungsbetriebs trifft der in das Basisteil 11 eintretende Fluidstrom auf die Schaufeln 21 des Turbinenrads 19 und treibt dieses an. Anschließend verzweigt sich der Fluidstrom in zwei entgegengesetzte Teilströme, tritt durch die Getriebe 23a, 23b hindurch und gelangt in einen inneren Hohlraum 14 (Fig. 1) der Bürstenelemente, aus welchem er durch geeignete, nicht dargestellte Öffnungen austritt und so die zu reinigende Oberfläche benetzt. In Verbindung mit der rotierenden Reinigungsbewegung der Bürstenelemente wird somit eine hohe Reinigungswirkung erzielt.

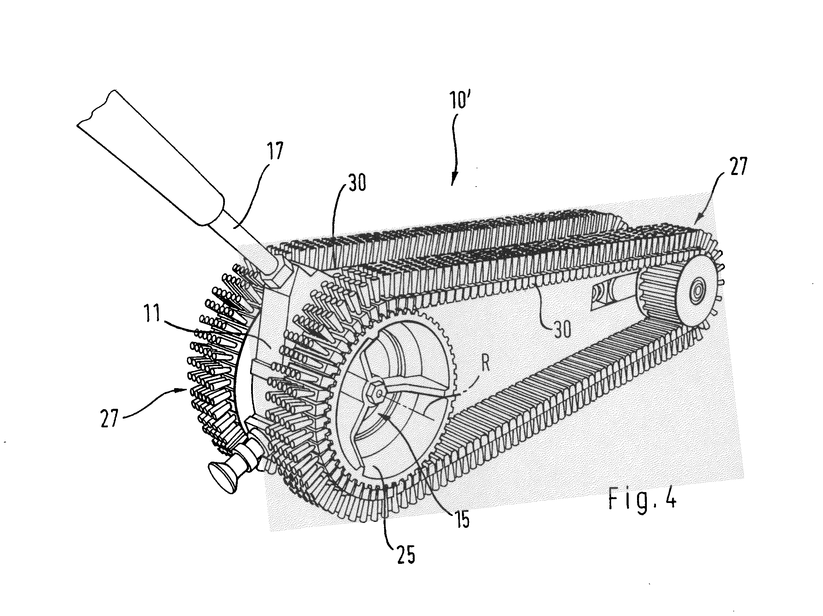

Fig. 4 zeigt eine alternative Ausführungsform der Erfindung. Der Reinigungskopf 10' ist hier derart gestaltet, dass der Fluidantrieb 15 anstelle von zylindrischen Reinigungswalzen zwei Antriebsrollen 25 antreibt, welche jeweiligen Riementrieb-Anordnungen 27 zugeordnet sind. Die Riementrieb-Anordnungen 27 weisen jeweils einen beborsteten Riemen 30 auf, welcher bei dieser Ausführungsform das Bürstenelement bildet. Die Riemen 30 werden durch die rotierenden Antriebsrollen 25 in eine umlaufende Reinigungsbewegung versetzt.

Abgesehen von den beiden offenbarten Ausführungsformen sind noch verschiedene weitere in Reinigungsbewegung versetzbare Bürstenelemente denkbar, z.B. schwingende oder rüttelnde Bürsten. Unabhängig von der Art der Reinigungsbewegung sorgt jedoch ein einzelnes Antriebsorgan für den Antrieb zweier an entgegengesetzten Seiten eines Basisteils angeordneter Bürstenelemente. Die Erfindung ermöglicht somit unter geringem Kostenaufwand und mit relativ geringem Eigengewicht eine effektive Reinigung von Solaranlagen.

### Bezugszeichenliste

- 10, 10': Reinigungskopf
- 11: Basisteil
- 13a, 13b: Bürstenelement
- 15: Fluidantrieb
- 17: Anschlussstück
- 19: Turbinenrad
- 21: Schaufel
- 23a, 23b: Getriebe
- 25: Antriebsrolle
- 26: Antriebswelle
- 27: Riementrieb-Anordnung
- 30: Riemen
- R: Rotationsachse

## Patentansprüche

1. Vorrichtung zum Reinigen von Oberflächen, mit einem Reinigungskopf (10, 10'), der ein Basisteil (11) und wenigstens zwei an entgegengesetzten Seiten des Basisteils (11) vorgesehene Bürstenelemente (13a, 13b, 30) umfasst, die in eine Reinigungsbewegung relativ zu dem Basisteil (11) versetzbar sind,
wobei in das Basisteil (11) ein Fluidantrieb (15) integriert ist, welcher dazu ausgebildet ist, die Strömungsenergie eines dem Basisteil (11) unter Druck zugeführten Fluids in die Reinigungsbewegung der Bürstenelemente (13a, 13b, 30) umzusetzen,
wobei der Fluidantrieb (15) ein unmittelbar vom Fluid angetriebenes Antriebsorgan (19), insbesondere eine Turbine oder ein Schaufelrad, aufweist, von dem beide Bürstenelemente (13a, 13b, 30) gemeinsam antreibbar sind, und
wobei der Fluidantrieb (15) einen gemeinsamen Fluidzufluss, ein Mittel zum Verzweigen eines zugeführten Fluidstroms in zwei entgegengesetzte Teilströme und zwei an den entgegengesetzten Seiten des Basisteils (11) vorgesehene, zu den jeweiligen Bürstenelementen (13a, 13b) führende Fluidabflüsse zur Beaufschlagung der Bürstenelemente (13a, 13b) von innen heraus aufweist.

2. Vorrichtung nach Anspruch 1, wobei
der Fluidantrieb (15) eine Getriebeeinheit mit einem vom Fluid beaufschlagten Eingang am Antriebsorgan (19) und zwei die Bürstenelemente (13a, 13b, 30) beaufschlagenden Ausgängen umfasst.

3. Vorrichtung nach Anspruch 1 oder 2, wobei
für jedes Bürstenelement (13a, 13b) ein Getriebe (23a, 23b) vorgesehen ist, wobei die Getriebe (23a, 23b) eingangsseitig mit dem gemeinsamen Antriebsorgan (19) gekoppelt sind.

4. Vorrichtung nach einem der vorhergehenden Ansprüche, wobei
der Fluidantrieb (15) direkt die walzenförmig gestalteten Bürstenelemente (13a, 13b) oder Antriebsrollen (25) für die Bürstenelemente (30) in Rotation versetzt.

## Claims

1. An apparatus for cleaning surfaces, having
a cleaning head (10, 10') which includes a base part (11) and at least two brush elements (13a, 13b, 30) which are provided at opposite sides of the base part (11) and which can be set into a cleaning movement relative to the base part (11),
wherein a fluid drive (15) is integrated into the base part (11) which is designed to convert flow energy of a fluid supplied at pressure to the base part (11) into the cleaning movement of the brush elements (13a, 13b, 30);
wherein the fluid drive (15) has a drive member (19), in particular a turbine or a bucket wheel, which is driven directly by the fluid and by which both brush elements (13a, 13b, 30) can be driven together; and
wherein the fluid drive (15) has a common fluid inflow, a means for branching off a supplied fluid flow into two opposite part flows and two fluid outflows provided at the opposite sides of the base part (11) and leading to the respective brush elements (13a, 13b) for acting on the brush elements from the inside.

2. An apparatus in accordance with claim 1, wherein
the fluid drive (15) includes a transmission unit having an inlet acted on by the fluid at the drive member (19) and two outlets acting on the brush elements (13a, 13b, 30).

3. An apparatus in accordance with claim 1 or 2, wherein
a transmission (23a, 23b) is provided for each brush element (13a, 13b), with the transmissions (23a, 23b) being coupled at the inlet side to the common drive member (19).

4. An apparatus in accordance with any one of the preceding claims,
wherein
the fluid drive (15) directly sets into rotation the brush elements (13a, 13b) designed in roll form or drive rollers (25) for the brush elements (30).

## Revendications

1. Dispositif pour le nettoyage de surfaces, comprenant une tête de nettoyage (10, 10'), qui inclut une partie de base (11) et au moins deux éléments à brosse (13a, 13b, 30) prévus sur des côtés opposés de la partie de base (11), lesquels peuvent être mis dans un mouvement de nettoyage par rapport à la partie de base (11),
dans lequel un entraînement à fluide (15) est intégré dans la partie de base (11), lequel est réalisé pour convertir l'énergie d'écoulement d'un fluide admis dans la partie de base (11) sous pression, dans le mouvement de nettoyage des éléments à brosse (13a, 13b, 30),
dans lequel l'entraînement à fluide (15) comprend un organe d'entraînement (19) entraîné directement par le fluide, en particulier une turbine ou une roue à aubes par laquelle les deux éléments à brosse (13a, 13b, 30) peuvent être conjointement entraînés, et
dans lequel l'entraînement à fluide (15) comprend une arrivée de fluide commune, un moyen pour ramifier un écoulement de fluide entrant en deux écoulements partiels opposés, et deux évacuations de fluide prévues sur les côtés opposés de la partie de base (11) et menant aux éléments à brosse respectifs (13a, 13b) pour solliciter les éléments à brosse (13a, 13b) depuis l'intérieur.

2. Dispositif selon la revendication 1,
dans lequel l'entraînement à fluide (15) inclut une unité à mécanisme avec une entrée, sollicitée par le fluide, sur l'organe d'entraînement (19), et deux sorties qui sollicitent les éléments à brosse (13a, 13b, 30).

3. Dispositif selon la revendication 1 ou 2,
dans lequel il est prévu un mécanisme (23a, 23b) pour chaque élément à brosse (13a, 13b), et dans lequel les mécanismes (23a, 23b) sont couplés du côté entrée à l'organe d'entraînement commun (19).

4. Dispositif selon l'une des revendications précédentes,
dans lequel l'entraînement à fluide (15) met en rotation soit directement les éléments à brosse (13a, 13b) conçus sous forme de cylindres, soit des rouleaux d'entraînement (25) pour les éléments à brosse (30).
